# EUROPÄISCHE PATENTSCHRIFT

(11) **EP 2 833 769 B1**
(45) Veröffentlichungstag und Bekanntmachung des Hinweises auf die Patenterteilung: **06.07.2016**
(21) Anmeldenummer: 13713072.0
(22) Anmeldetag: 21.03.2013
(51) Int. Cl.: A47J 37/04

(54) **GRILLGERÄT**
GRILL APPLIANCE
RÔTISSOIRE

(30) Priorität: 05.04.2012 CH 4812012
(43) Veröffentlichungstag der Anmeldung: 11.02.2015
(73) Patentinhaber: Tompac. E. T. Marquardt, 9512 Rossrüti (CH)
(72) Erfinder: BUI, Khamping, 9524 Zuzwil (CH)
(74) Vertreter: Frei Patent Attorneys
(86) Internationale Anmeldenummer: PCT/CH2013/000049
(87) Internationale Veröffentlichungsnummer: WO 2013/149352

(56) Entgegenhaltungen:
- EP-A1- 2 149 323
- FR-A1- 2 954 686
- FR-A3- 2 811 534
- US-A- 2 012 702

## Beschreibung

Die Erfindung besieht sich auf das Gebiet der Grillgeräte und betrifft einen Grillspiesswender. Grillspiesswender dienen dazu, an Grillspiessen aufgespiesste Nahrungsmittel, wie Fleisch, Fisch oder Gemüse, in der Nähe einer Wärmequelle zu garen. Bei einem Grillspiesswender handelt es sich dementsprechend um ein Grillgerät zur Aufnahme und zum automatisierten Drehen bzw. Wenden wenigstens eines Grillspiesses.

Traditionsgernäss gart man Nahrungsmittelspiesse über einem Feuer. Der Benutzer dreht die Grillspiesse mit der Hand, um auf diese Weise eine einheitliche und optimale Garung der aufgespiessten Nahrungsmittel zu erreichen.

Bei dieser manuell gesteuerten Garung muss der Benutzer seine ganze Aufmerksamkeit dem Überwachen und Wenden der Grillspiesse zukommen lassen, um zu verhindern dass die Nahrungsmittel nicht teilweise angebrannt und teilweise roh sind.

Aus der US-Patentschrift US 3 939 761 ist ein Grillspiesswender bekannt, der mit einem rechteckigen, nach oben geöffneten Kasten versehen ist, dessen vordere und hintere Platte mit Paaren vertikaler Kerben versehen sind, um die Grillspiesse horizontal liegend aufzunehmen. Jeder Grillspiess weist einen Griff auf, an dessen spiessseitigen Ende ein Zahnrad vorgesehen ist, das in eine endlose Kette eingreift Die endlose Kette wird mit Hilfe eines Motors längs der vorderen Platte in Bewegung versetzt. Die Bewegung der endlosen Kette treibt die Zahnräder zur Drehung an und damit auch die Grillspiesse über dem Feuer, Der Spiesskörper der Grillspiessen ist also horizontal gelagert, wobei die Wärmequelle unterhalb der Grillspiesse angeordnet ist.

Die Patentanmeldung DE 1 404 775 offenbart einen Grillspiesswender, der eine von einem Motor angetriebene Schnecke beinhaltet. Die Schnecke ist parallel zu einer vorderen Platte der Vorrichtung positioniert und verzahnt sich mit Zahnrädern an den horizontal liegenden Grillspiessen. Auf diese Weise werden die Grillspiesse über ihre Zahnräder von der Schnecke zur Drehung angetrieben,

Weiter ist aus der US-Patentschrift US 4 154 154 ein Grillspiesswender bekannt, bei dem, anders als bei der oben zitierten Schrift DE 1 404 775, die ebenfalls horizontal angeordneten Grillspiessen auskragend befestigt sind. D.h., jeder Grillspiess weist ein unbefestigtes Ende auf. Jeder Grillspiess wird von einer Schnecke, die ihrerseits von einem Motor angetrieben wird, zur Drehung angetrieben, und zwar über ein mit dem Grillspiess verbundenes Zahnrad.

Die Druckschrift DE 694 14 243 T2 beschreibt einen automatischen Grillspiesswender, der einen Träger umfasst, wobei der Träger eine vordere und eine hintere Platte aufweist, die an ihrem oberen Rand mit Kerben zur Aufnahme von horizontal liegenden Grillspiessen ausgebildet sind. Jeder Grillspiess ist an einem seiner Enden mit einem Griff versehen, der mit einem Zahnrad ausgestattet ist. Eine von einem Motor angetriebene Schnecke treibt die Grillspiesse mittels ihrer zugehörigen Zahnräder zur Drehung an. Der Grillspiesswender enthält Mittel zum automatischen Ausrücken eines Zahnrads bezüglich der Antriebsschnecke bei einer Blockierung des dem Zahnrad zugeordneten Grillspiesses.

Die Grillspiesswender gemäss den oben genannten Druckschriften weisen den Nachteil auf, dass die Wärmequelle unterhalb des Grillspiesses, d.h. unterhalb des Grillgutes angeordnet ist. Dadurch kann während des Grillens Grillgut oder Saft vom Grillgut, wie z. B. Fett oder Wasser in die Wärmequelle fallen und diese verschmutzen. Je nach Ausgestaltung der Wärmequelle kann die Reinigung der verschmutzten Wärmequelle recht aufwendig sein. Im Weiteren besteht die Gefahr, dass das herunter gefallene Grillgut oder dessen Saft, insbesondere Fett, in Kontakt mit der Wärmequelle in Brand gerät. Rückstände von verbranntem Fett bilden hartnäckige Verschmutzungen und erhöhen den Reinigungsaufwand weiteres. Zudem können die Flammen des in Brand geratenen Saftes bzw. Fettes das Grillgut an den Grillspiessen erreichen und dieses verkohlen.

Die horizontale Auflage der Grillspiessen ist überdies antriebstechnisch ungünstig. Einerseits sind die Lagerungsstellen des Grillspiesses seitlich am Spiesskörper ausgebildet. Andererseits führt eine nicht rotationssymmetrische Masseverteilung des Grillgutes am Grillspiesse in Zusammenwirken mit der in Drehrichtung wirkenden Gravitationskraft zu einer ungleichmässigen Belastung des Antriebes.

Ferner neigen die horizontal gelagerten Grillspiessen zur plötzlichen Blockierung während der Drehung. Die Blockierung während der Drehung eines Grillspiesses äussert sich darin, dass z. B. das dem Spiess zugeordnete Zahnrad während der Drehung blockiert. Die Blockierung des Zahnrades hat zur Folge, dass die endlose Kette oder die Antriebsschnecke, die mit besagtem Zahnrad in Eingriff ist, blockiert. Im allgemeinen ist der Antriebsmotor derart gewählt wird, dass sein Drehmoment nicht wesentlich höher ist als für den normalen Betrieb vonnöten. Daraus ergibt sich, dass das geringste Blockieren im Bereich eines Grillspiesses das völlige Blockieren des gesamten Grillspiesswenders verursacht, was einerseits zu Beschädigungen an Motor und Antriebselementen führt, andererseits zu heterogener Garung aller grillende Spiesse führt, falls der Benutzer nicht rechtzeitig von der Blockierung des Grillspiessantriebes informiert wird.

Die Publikationsschrift US 2, 012,702 beschreibt einen Grillspiesswender mit einer Mehrzahl von vertikal angeordneten Grillspiessen, welche in kreisförmiger Anordnung an einem radförmigen, horizontal gelagerten Drehkörper angebracht sind. Der Drehkörper ist mit einer drehbar gelagerten und vertikal ausgerichteten Hohlwelle verbunden. Durch Drehen des radförmigen Drehkörpers bewegen sich die Spiesse um die Drehachse der Hohlwelle, in dessen Bereich auch die Wärmequelle vorgesehen ist. Im Weiteren ist ein Kontaktkörper mit mehreren abstehenden Armen vorgesehen, welcher an einem, in die Hohlwelle eingeführten und drehfest gesicherten Schaft befestigt ist. Die sich um die Drehachse der Hohlwelle bewegenden Grillspiesse gelangen über ein Sternrad mit den stationären Kontaktarmen in Kontakt und werden so während ihres Umlaufs um die Drehachse der Hohlwelle periodisch ein wenig gedrehet.

Die Publikationsschrift FR-A-2 954 686 beschreibt ein Grillgerät mit einer zentral angeordneten Wärmequelle und seitlich davon angeordneten Grillkörben, welche vertikal ausgerichtet sind und das Grillgut aufnehmen. Die Grillkörbe werden über eine Antriebskette um ihre Achse drehend angetriebene.

Die Publikationsschrift FR-A-2 811 534 beschreibt einen Grillspiesswender mit einer Mehrzahl von vertikal angeordneten Grillspiessen, welche in kreisförmiger Anordnung an einem ringförmigen, horizontal gelagerten Drehkörper angebracht sind. Die Wärmequelle ist im Zentrum der kreisförmigen Anordnung der Griellspiesse vorgesehen. Der ringförmige Drehkörper weist eine Aussenverzahnung auf, über welche dieser von einem Antriebszahnrad eines Antriebes angetrieben wird. Durch Drehen des Drehkörpers werden die Grillspiesse in einer Kreisbahn um die Wärmequelle bewegt. Unterhalb des ringförmigen Drehkörpers ist ein stationärer Ringkörper mit einer Innenverzahnung angeordnet. Die Grillspiesse enthalten Zahnräder, welche sich unter Ausbildung einer Verzahnung mit der Innenverzahnung entlang der Innenverzahnung des stationären Ringkörpers bewegen und dabei drehen, so dass die Grillspiesse während ihrer Bewegung um die Wärmequelle gedreht werden.

Die Publikationsschrift EP-A-2 149 323 beschreibt ein Grillgerät mit einer zentral angeordneten Wärmequelle und seitlich davon jeweils in einer Reihe angeordneten Grillspiessen, welche vertikal ausgerichtet sind. Die Grillspiesse sind über eine kragenförmige Anformung an einer horizontalen Strebe aufgehängt.

Der Erfindung liegt die Aufgabe zugrunde, einen einfach konzipierten und kostengünstigen Grillspiesswender vorzuschlagen, der die oben genannten Nachteile der bekannten Grillspiesswender behebt oder zumindest mindert und eine einheitliche Garung der aufgespiessten Nahrungsmittel gewährleistet.

Diese Aufgabe wird durch die Merkmale des unabhängigen Anspruchs 1 gelöst. Weitere bevorzugte Ausführungsformen und Weiterbildungen der Erfindung gehen aus den abhängigen Patentansprüchen hervor.

Der erfindungsgemässe Grillspiesswender enthält:
- ein Gehäuse;
- wenigstens eine horizontal oder im Wesentlichen horizontal am Gehäuse angeordnete Antriebswelle zum Drehen wenigstens eines Grillspiesses;
- einen Antrieb zum Antreiben der Antriebswelle; und
- eine Wärmequelle zum Grillen eines am Grillspiesse angebrachten Grillgutes.

Unter "Grillen" soll im Zusammenhang mit dem Grillspiesswender im Weiteren Sinne ein Verfahren zum Garen von Nahrungsmittel mittels Strahlungswärme verstanden werden. Der Begriff "Grillen" soll im vorliegenden Verständnis insbesondere nicht zwingend einen Rost umfassen.

Die Antriebswelle enthält dabei mehrere Drehmomentübertragungselemente zur Übertragung eines Drehmoments von der Antriebswelle auf den Grillspiess.

Im Wesentlichen horizontal bedeutet, dass die wenigstens eine Antriebswelle weniger als 10° (Winkelgrade), insbesondere weniger als 5° von einer Horizontalen abweicht. Bevorzugt ist die wenigstens eine Antriebswelle horizontal ausgerichtet.

Die Erfindung zeichnet sich nun dadurch aus, dass das Drehmomentübertragungselement zur im Wesentlichen vertikalen Halterung des Grillspiesses und zum Ein griff mit einem griffseitig an einem Grillspiess angeordneten Drehmomentübertragungselement ausgelegt ist. Der Grillspiesswender ist dabei so ausgelegt, dass der Griffkörper des Grillspiesses bezüglich Schwerkraftrichtung oben und das freie Ende des Grillspiesses unten angeordnet sind.

Das Drehmomentübertragungselement ist bevorzugt drehfest mit der Antriebswelle verbunden bzw. an diese angebracht. Das Drehmomentübertragungselement der Antriebswelle ist bevorzugt ein Antriebsrad bzw. eine Antriebsrolle. Das Antriebsrad kann als Reibrad oder Zahnrad ausgebildet sein. Das Antriebsrad bzw. die Antriebsrolle kann z. B. aus einem Kunststoff, insbesondere aus einem gummielastischen Material sein. Das Antriebsrad kann z. B. mit einem O-Ring, der als Reibelement dient, ausgerüstet sein.

Der Grillspiesswender umfasst bevorzugt wenigstens einen Grillspiess mit einem Griffkörper und einem Spiesskörper. Der Grillspiess enthält ferner ein griffseitig angeordnetes Drehmomentübertragungselement mit einer zum Spiesskörper weisenden Eingriffseite, welche mit dem Drehmomentübertragungselement der Antriebswelle in Eingriff bringbar ist.

Die Eingriffseite des Grillspiesses ist bevorzugt für einen formschlüssigen und/oder reibschlüssigen Eingriff des Drehmomentübertragungselementes der Antriebswelle, insbesondere eines Rades, wie oben erwähnt, ausgelegt.

Die Eingriffseite des Grillspiesses kann für einen formschlüssigen Eingriff des Drehmomentübertragungselementes der Antriebswelle, insbesondere eines Rades, z. B. eines Zahnrades, Erhebungen und Vertiefungen aufweisen.

Das griffseitig am Grillspiess angeordnete Drehmomentübertragungselement ist bevorzugt eine zwischen dem Griffkörper und dem Spiesskörper bzw. am Übergang vom Griffkörper zum Spiesskörper angeordnete kragenartige Anformung, insbesondere eine Auskragung, welche eine dem Spiesskörper zugewandte Eingriffseite für das Drehmomentübertragungselement an der Antriebswelle ausbildet.

Die kragenartige Anformung ist bevorzugt vollumfanglich umlaufend ausgebildet. Die Anformung schliesst bevorzugt unmittelbar an den Griffkörper an. Der Spiesskörper tritt bevorzugt aus der kragenartige Anformung aus. Die kragenartige Anformung kann als separates Bauteil ausgebildet sein oder integraler Bestandteil des Griffkörpers sein, d.h. einstückig mit dem Griffkörper ausgebildet. So kann der Griffkörper nahtlos in die kragenartige Anformung übergehen.

Die kragenartige Anformung kann flach, wie z. B. plattenförmig oder tellerförmig oder konkav, wie z. B. becherförmig, pilzförmig oder hutförmig ausgebildet sein. Aufgrund der selbstzentrierenden Eigenschaften der Grillspiessanordnung, wie weiter unten noch ausgeführt wird, kann die kragenartige Anformung nämlich durchaus auch flach ausgebildet sein.

Entsprechend ist die Eingriffseite eben oder konkav gewölbt ausgebildet.

Die kragenartige Anformung kann einen umlaufenden Umfassungsrand aufweisen, welcher einen Anschlag für ein an der bzw. in die Eingriffseite ein- bzw. angreifendes Drehmomentübertrangungselement der Antriebswelle ausbildet, so dass dieses nicht ohne weiteres aus der Eingriffseite wegrutschen kann. Aufgrund der selbstzentrierenden Eigenschaften der Grillspiessanordnung ist der Umfassungsrand jedoch nicht zwingend erforderlich.

Die kragenartige Anformung kann je nach Dimensionierung zusätzlich die Funktion als Hitzeschild bzw. -schutz übernehmen, da die abkragende Anformung die Hitze vom Griffkörper abzuhalten im Stande ist.

Die Eingriffseite des Drehmomentübertragungselements kann insbesondere eine dem Spiesskörper zugewandte konkave, insbesondere becherartige Öffnung umfassen, wobei das Drehmomentübertragungselement der Antriebsachse in diese konkave Vertiefung eingreift.

Der Grillspiesswender ist bevorzugt zur vertikalen oder im Wesentlichen vertikalen Halterung einer Mehrzahl von Grillspiessen ausgelegt. Im Wesentlichen vertikal bedeutet, dass die Achsen der Grillspiesse einen Winkel zur Vertikalachse von 40° (Winkelgrade) oder weniger, vorzugweise von 20° oder weniger, insbesondere von 10° oder weniger und besonders bevorzugt von 5° oder weniger aufweist. Gemäss einer besonderen Ausführungsform sind die Achsen der Grillspiesse vertikal ausgerichtet. Weist der Grillspiesse einen Winkel zur Vertikalachse auf, so ist dieser mit seinem griffseitigen Endabschnitt bevorzugt zur Antriebswelle hin geneigt.

Der Grillspiesswender ist zur Aufnahme von mehreren Grillspiessen ausgelegt, die wenigstens eine Antriebswelle enthält mehrere entlang ihrer Längserstreckung, vorzugsweise gleichmässig, voneinander beabstandet angeordnete Drehmomentübertragungselemente der oben beschriebenen Art für jeweils einen Eingriff mit einem Grillspiess.

Gemäss einer besonders bevorzugten Weiterbildung des Grillspiesswenders enthält dieser zwei im Wesentlichen parallel nebeneinander und voneinander beabstandet geführte Antriebswellen. Im Wesentlichen parallel bedeutet, dass die Antriebswellen einen Winkel von weniger als 20° (Winkelgrade), vorzugsweise von weniger als 10°, insbesondere von weniger als 5° einschliessen. Bevorzugt verlaufen die beiden Antriebswellen parallel zueinander.

Die beiden Antriebswellen enthalten mehrere entlang ihrer Längserstreckung, vorzugsweise gleichmässig, voneinander beabstandet angeordnete Drehmomentübertragungselemente der oben beschriebenen Art für jeweils einen Eingriff mit einem Grillspiess.

Die Wärmequelle ist bevorzugt derart im Grillspiesswender angeordnet, dass die abgegebene Wärme in Schwerkraftrichtung betrachtet seitlich an das Grillgut abgegeben wird. Die Wärme wird bevorzugt ausschliesslich seitlich an das Grillgut abgeben.

Die Wärmequelle ist daher bevorzugt vertikal ausgerichtet.

Die Wärmequelle umfasst bevorzugt ein elektrisches Heizmittel, Die Wärmequelle kann insbesondere eine elektrisch geheizte Heizschlange umfassen.

Die Wärmequelle kann auch durch Körper, wie Kunst-oder Natursteine, welche eine hohe Wärmekapazität aufweisen, ausgebildet sein. Naturstein können z. B. Lavasteine sein. Die Körper können z. B. plattenförmig sein.

Die Wärmequelle kann auch gasbeheizte Elemente umfassen. Ferner kann die Wärmequelle auch durch brennbare Objekte, wie Kohle oder Holz gebildet sein.

Gemäss einer besonderen Ausführungsform umfasst die Wärmequelle einen Korb, insbesondere einen vertikal orientierten Korb, welcher Wärme abgebende Objekte, wie brennendes Holz oder Kohle oder heisse Steine, enthält.

Die Wärmequelle ist also in Schwerkraftrichtung betrachtet seitlich von dem oder den Grillspiess(en) angeordnet.

Entlang der Antriebswelle bzw. entlang der beiden nebeneinander angeordneten Antriebswellen sind entsprechend bevorzugt mehrere Grillspiesse in Reihe hintereinander angeordnete, wobei jeder Grillspiess einem Drehmomentübertragungselement an der Antriebswelle zugeordnete ist. Die Wärmequelle ist hierbei vorzugsweise zwischen den beiden Reihen von Grillspiesse angeordnet.

Unterhalb des oder der Grillspiesse, insbesondere im Bodenbereich des Gehäuses, ist bevorzugt eine Auffangwanne zum Auffangen von abfallendem Grillgut oder herunter tropfendem Saft angeordnet. Die Auffangwanne ist bevorzugt am Gehäuseboden angeordnet.

Im unteren Bereich des Grillspiesswenders, jedoch insbesondere über oder in der Auffangwanne, ist bevorzugt ein Führungseinsatz mit Durchgangsöffnungen angeordnet, durch welche die Enden der Spiesskörper geführt sind. Die Durchgangsöffnungen bilden bevorzugt einen seitlichen Anschlag bzw. eine seitliche Führung aus, damit die Grillspiesse mit ihren unteren Endabschnitten nicht wegschwenken können. Die Führung ist vorzugsweise nicht formschlüssig.

Die lockere Führung der Spiesskörper im unteren Bereich kann unter anderem bei einer nicht ausgeglichenen Masseverteilung am Grillspiess notwendig sein. Dies, weil sonst die Unwucht des rotierenden Grillspiesses, diesen in Schwingung versetzen bzw. zum Pendeln bringen würde.

Hierzu ist festzuhalten, dass der Reib- bzw. Formschluss unter anderem durch das Aufliegen des Grillspiesses über seine Eingriffseite auf dem Drehmomentübertragungselement der Antriebswelle zustande kommt. Die Aufliegekraft wird bevorzugt durch das aufliegende Gewicht des Grillspiesses erzeugt.

Der Grillspiesse ist nun jeweils bevorzugt wenigstens teilweise und besonders bevorzugt ausschliesslich über das Drehmomentübertragungselement vertikal, also in Schwerkraftrichtung, abgestützt.

Das unter Ende des Spiesskörpers braucht daher nicht in einem Stützlager geführt zu sein. Es kann frei hängend sein. Dennoch ist eine seitliche Führung des unteren Endabschnittes des Grillspiesses, z. B. ein einem Führungseinsatz wie oben beschrieben, von Vorteil.

Das untere Ende des Spiesskörpers, insbesondere die Spiessspitze, kann jedoch auch drehbar vertikal gelagert und der Grillspiess somit abgestützt sein.

Der Grillspiess ist bevorzugt über sein Drehmomentübertragungselement am Drehmomentübertragungselement der Antriebswelle aufgehängt und wird über den Kontakt zwischen den beiden Drehmomentübertragungselementen angetrieben. Dies funktioniert besonders gut, wenn das Drehmomentübertragungselement zum Spiesskörper hin eine konkave Vertiefung aufweist.

Der Grillspiess kann in Betriebsstellung mit seinem Spiesskörper seitlich der Antriebswelle anliegen. Der Grillspiess wird nun durch den Kontaktantrieb zwischen den beiden Drehmomentübertragungselement sowie dem Kontakt zwischen Spiesskörper und Antriebswelle während der Drehung selbstzentriert.

Die Selbstzentrierung kommt dadurch zustande, indem die zwischen den sich kontaktierenden Drehmomentübertragungselementen wirkende Kraft den Spiesskörper gegen die sich drehende Antriebswelle drückt. Der Spiesskörper ist folglich in Reibkontakt mit der Antriebswelle. Dies erzeugt wiederum eine Reibkraft zwischen dem Spiesskörper und der Antriebswelle, welche den Grillspiess gegen das diesem zugeordnete Drehmomentübertragungselement an der Antriebswelle drückt. Die beiden Kräfte fixieren also den sich drehenden Spiess in einer Position anliegend am Drehmomentübertragungselement der Antriebswelle und der Antriebswelle.

Das Drehmomentübertragungselement der Antriebswelle liegt in Betriebsstellung bevorzugt in unmittelbarer Nähe zum Spiesskörper.

Die Selbstzentrierung kann zusätzlich zum obigen Kontakt zwischen Spiesskörper und Antriebswelle auch durch den Kontakt zwischen dem Spiesskörper und einer seitliche Führung, wie weiter unten näher beschrieben, am unteren Endabschnittes des Grillspiesses unterstützt werden.

Der Grillspiess enthält erfindungemäss ein griffseitig angeordnetes kragenförmiges Drehmomentübertragungselement, welches mit einem Drehmomentübertragungselement der Antriebswelle eines Grillspiesswenders zur Übertragung eines Drehmoments in Eingriff bringbar ist.

Die vorliegende Erfindung vereinigt eine vertikale Anordnung der Grillspiesse mit einem automatischen Antrieb zum Drehen bzw. Wenden der Grillspiesse.

Der Antrieb umfasst bevorzugt wenigstens einen Antriebsmotor, insbesondere einen elektrischen Antriebsmotor. Die beiden Antriebswellen können z. B. durch einen gemeinsamen oder durch zwei unabhängige Antriebsmotoren angetrieben werden. Die Antriebsmotoren können Direktantriebe sein.

Gemäss einer besonderen Weiterbildung der Erfindung sind, insbesondere in einem seitlichen Teilgehäuse, zwei elektrische Antriebsmotoren vorgesehen. Ein erster Antriebsmotor ist, insbesondere koaxial, mit einer ersten Antriebswelle und ein zweiter Antriebmotor ist, insbesondere koaxial, mit einer zweiten Antriebswelle verbunden. Die beiden Antriebsmotoren können hierbei über eine Drehmomentstütze miteinander verbunden sein. Die Drehmomentstütze sichert die beiden Antriebsmotoren gegenseitig gegen eine Verdrehung während des Betriebes.

Die Verdrehsicherung kann auch durch eine Verbindung der jeweiligen Antriebsmotoren mit dem angrenzenden Gehäuse erstellt werden.

Der Grillspiesswender kann zwischen dem Teilgehäuse und dem Seitenschild seitlich angeordnete, Abdeckungen als Spritz- und Hitzeschutz aufweisen. Die Abdeckungen sind bevorzugt demontierbar. Die Abdeckungen können jeweils eine Abdeckwand und ein Griffelement, wie z.B. eine Griffleiste, umfassen. Die Abdeckwand kann transparent sein und z. B. aus Glas bestehen. Die Abdeckwand ist bevorzugt nach aussen schwenkbar gehaltert, so dass diese zwischen einer Schliess- und einer Offenposition nach oben bzw. nach unten schwenkbar ist. Die Schwenkachse ist bevorzugt jeweils in einem unteren Endabschnitt der Abdeckungen angeordnet. Die Schwenkachse verläuft bevorzugt horizontal.

Diese Anordnung ist gegenüber einer horizontalen Anordnung der Grillspiesse, wie sie aus dem Stand der Technik bekannt ist, äusserst platzsparend. Entsprechend kann auch der Grillspiesswender kompakt ausgebildet werden, so dass dieser eine vergleichsweise kleine Stellfläche benötigt. Die kompakte Bauweise erweist sich insbesondere bei der Verwendung des Grillspiesswenders als Tischgrill von grossem Vorteil.

Ein weiterer Vorteil der Anordnung liegt darin, dass der Saft des Grillgutes dank der seitlichen Anordnung der Wärmequelle nicht in die Wärmequelle sondern in eine extra dafür vorgesehene Auffangwanne an der Basis des Grillspiesswenders fällt. Dementsprechend verbrennt auch der Saft nicht mehr und die bereits oben geschilderten nachteiligen Folgen dieser Anordnung bleiben ebenfalls aus.

Da die Schwerkraftrichtung stets senkrecht oder zumindest im wesentlichen Senkrecht zur Drehrichtung des bzw, der Grillspiesse liegt, ist stets ein gleichmässiges Wenden des Grillspiesses gewährleistet Dies insbesondere auch dann, wenn die Verteilung des Grillgutes entlang des Umfanges des Grillspiesses ungleichmässig ist. Entsprechend ist auch die Lastaufnahme während einer Drehung gleichmässig, was sich positiv auf die Belastung des Antriebs auswirkt.

Ein weiterer Vorteil liegt auch darin, dass das Grillgut beim Grillen nicht so schnell austrocknet, da der Saft des Grillgutes dank der aufrechten Anordnung der Grillspiesse und der permanenten und gleichmässigen Drehung der Grillspiesse auf dem Grillgut bleibt. Fällt trotzdem Saft vom Grillgut ab, so fliesst dieser zuerst von oben nach unten über das Grillgut bis er dann zu unterst angelangt in die Auffangwanne tropft.

Die Grillspiesse lassen sich zudem einfach im Grillspiesswender positionieren und aus diesem wieder entnehmen. Zum Positionieren der Grillspiesse auf den Drehmomentüberlragungselementen der Antriebswelle(n) braucht es keine formschlüssige Fixierung,

Im Folgenden wird der Erfindungsgegenstand anhand eines bevorzugten Ausführungsbeispiels, welches in den beiliegenden Zeichnungen dargestellt ist, näher erläutert. Es zeigen:
- Figur 1:: eine perspektivische Ansicht eines erfindungsgemässen Grillspiesswenders;
- Figur 2:: eine Seitenansicht des Grillspiesswenders nach Figur 1;
- Figur 3:: eine perspektivische Ansicht von erfindungsgemässen Grillspiessen zur Verwendung in einem Grillspiesswender nach Figur 1;
- Figur 4:: eine Seitenansicht des Grillspiesswenders nach Figur 1 ausgehend von einem Seitenschnitt entlang der Linie A-A;
- Figur 5:: eine perspektivische Detailansicht des Grillspiesswenders nach Figur 1 aus dem Bereich der Drehmomentübertragungselemente;
- Figur 6:: eine perspektivische Ansicht einer Auffangwanne mit Führungseinsatz
- Figur 7:: eine perspektivische Ansicht eines weiteren erfindungsgemässen Grillspiesswenders;
- Figur 8:: eine perspektivische Ansicht des erfindungsgemässen Grillspiesswenders gemäss Figur 7 in teilmontiertem Zustand;
- Figur 9:: eine Draufsicht des Grillspiesswenders nach Figur 8 im Bereich der Antriebsmotoren;
- Figur 10:: eine perspektivische Ansicht der Verschalung zum Teilgehäuse des Grillspiesswenders gemäss Figur 7.

Grundsätzlich sind in den Figuren gleiche Teile mit gleichen Bezugszeichen versehen.

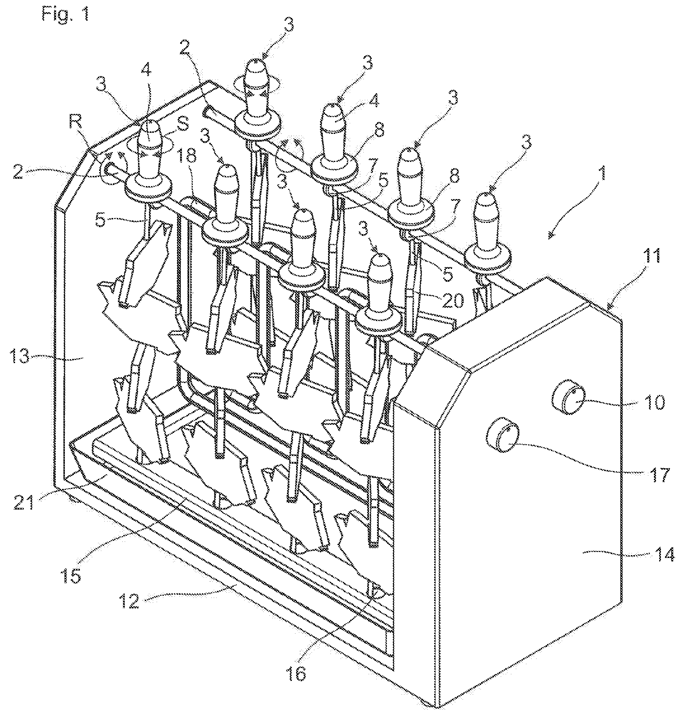

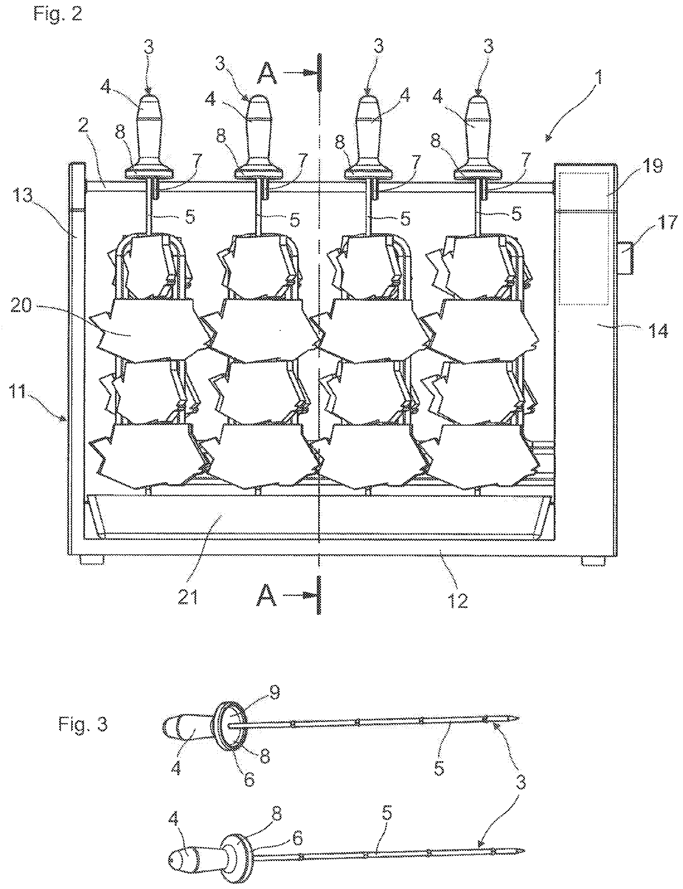

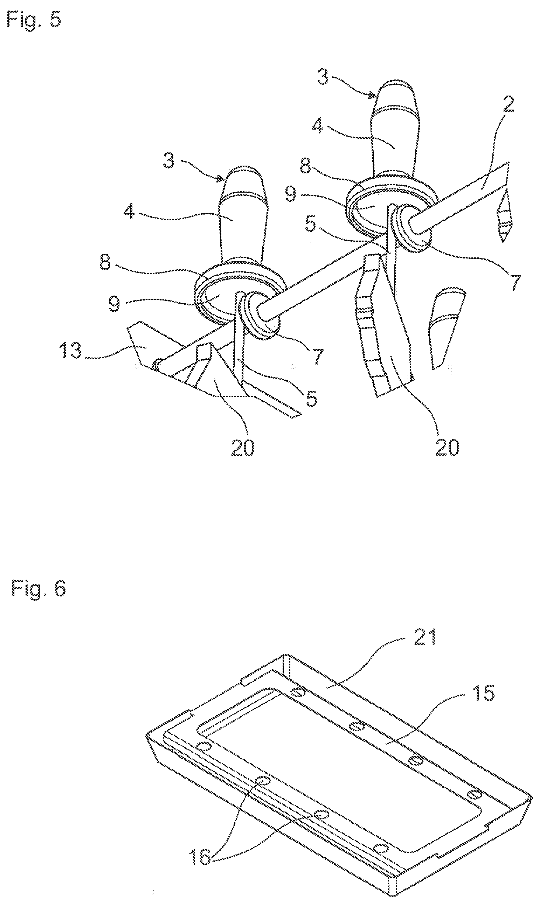

Die in den Figuren 1 bis 6 dargestellte Ausführungsform eines erfindungsgemässen Grillspiesswenders 1 weist ein Gehäuse 11 mit einem Gehäuseboden 12 sowie einem Seitenschild 13 und mit einem, dem Seitenschild 13 in Abstand gegenüber liegenden seitlichen Teilgehäuse 14 auf,

Das Gehäuse 11 ist zwischen dem Seitenschild 13 und dem seitlichen Teilgehäuse 14 nach oben und zur Seite hin offen ausgebildet, so dass die Grillspiesse 3 einfach an den Antriebswellen 2 angebracht und von diesen weggenommen werden können.

Im oberen Bereich des Gehäuses sind zwischen dem Seitenschild 13 und dem seitlichen Teilgehäuse 14 zwei horizontal verlaufende Antriebswellen 2 angeordnet. Die beiden Antriebswellen 2 sind bezüglich einer horizontalen Ebene parallel zueinander und voneinander beabstandet geführt.

Die Antriebswellen 2 sind jeweils mit einem ersten Ende am Seitenschild 13 und mit einem zweiten Ende am seitlichen Teilgehäuse 14 bzw. an einer darin gehalterten Vorrichtung drehbar gelagert.

Im seitlichen Teilgehäuse 14 ist ein elektrischer Antriebsmotor 19 vorgesehen, welcher die beiden Antriebswellen 2 antreibt. Die beiden Antriebswellen 2 können durch einen gemeinsamen oder durch zwei unabhängige Antriebe 19 angetrieben sein.

Ferner ist am seitlichen Teilgehäuse 14 auch ein Betätigungsschalter 17 zum Betätigen des Antriebs 19 vorgesehen. Der Betätigungsschalter erlauben zum Beispiel das Ein- und Ausschalten des Antriebs 19 sowie die Einstellung der Drehzahl der Antriebswellen 2.

Ein weiterer Betätigungsschalter 10 am seitlichen Teilgehäuse 14 erlaubt das Einund Ausschalten einer Wärmequelle 18 sowie gegebenenfalls auch das Einstellen der Wärmeleistung.

An jeder Antriebswelle 2 sind vier gleichmässig voneinander beabstandet angeordnete Drehmomentübertragungselement in Form von Reibrädern 7 vorgesehen. Die Reibräder 7 sind entsprechend vertikal ausgerichtet.

Der Grillspiesswender 1 umfasst ferner eine der Anzahl Reibräder 7 entsprechende Anzahl von Grillspiessen 3, welche jeweils einen Griffkörper 4 zum Halten des Grillspiesses 3 mit der Hand, sowie einen an den Griffkörper 4 anschliessenden Spiesskörper 5 zum Aufspiessen von Grillgut 20 umfassen.

Im Übergang vom Handgriff 4 zum Spiesskörper 5 ist ein Drehmomentübertragungselement in Form einer hutförmigen Auskragung 8 angeordnet. Die Auskragung 8 weist zum Spiesskörper 5 hin eine Eingriffseite 9 in Form einer konkaven, d.h. becherartigen Öffnung bzw. Vertiefung auf.

Die Grillspiesse 3 sind nun jeweils über ihre becherartigen Öffnungen 9 an den Reibrädern 7 aufgehängt. D.h. die Reibräder greifen in die becherartigen Öffnungen 9 ein und sind in reibschlüssigen Kontakt mit einer innen liegenden Fläche der Eingriffseite. Entsprechend liegen nun die Grillpiesse 3 über die besagte innen liegende Fläche mit ihrem gesamten oder partiellen Gewicht auf dem Reibrad 7 auf.

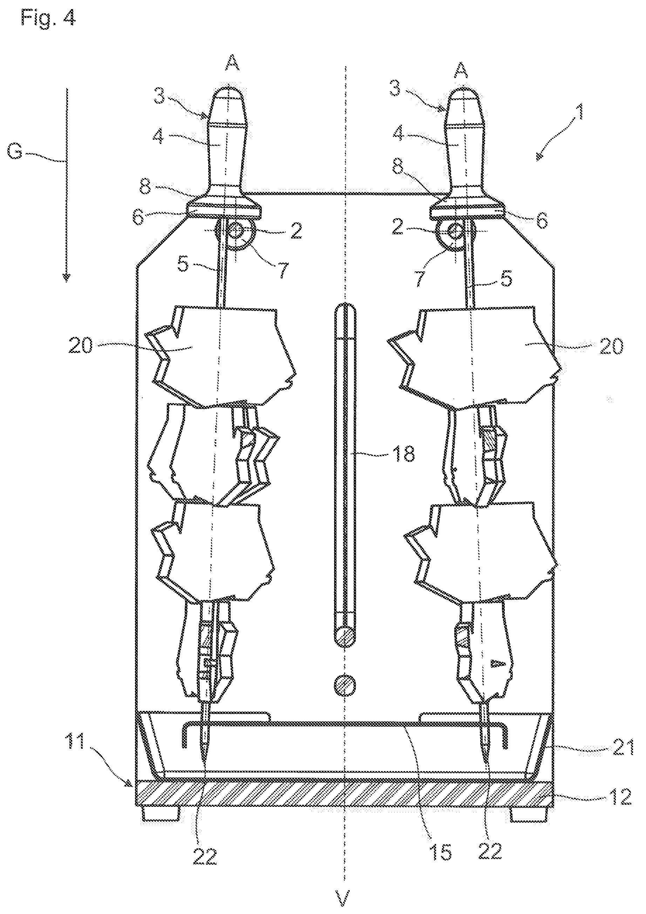

Wie im Weiteren der Figur 4 zu entnehmen ist, sind die Grillspiesse 3 mit ihren freien Enden, d.h. mit der Spiessspitze 22 nicht abgestützt. Vielmehr sorgt ein im Bodenbereich des Gehäuses 11 angeordneter Führungseinsatz 15 für eine seitliche Führung bzw. für einen seitlichen Anschlag der Spiesskörper 5 im Bereich ihrer freien Enden.

Der Führungseinsatz weist hierzu zwei voneinander beabstandet und parallel zur Achsrichtung, der Antriebswellen 2 angeordnete Reihen von jeweils vier Führungöffnungen in Form von Durchgangslöchern 16, durch welche jeweils die Endabschnitte der Spiesskörper 5 geführt sind. Der Fuhrungseinsatz 15 wird hier aus einem Blech gebildet

Die Durchgangslöcher 16 weisen einen grösseren Durchmesser auf als der Spiesskörper 5 in seinem Endabschnitt. Entsprechend weist der Spiesskörper 5 an seinem Endabschnitt etwas Spiel zur Seite hin auf. Die Durchgangslöcher 16 dienen jedoch als Seitenanschlag, welcher verhindert, dass der Grillspiess 3 mit seinem unteren Ende seitlich wegschwenken kann.

Im Bereich des Gehäusebodens 12 ist ferner eine nach oben offene Auffangwanne 21 zum Auffangen von herunter tropfendem Saft angeordnet. Die Auffangwanne 21 kann auch Teil des Gehäusebodens 12 sein oder diesen ausbilden. Der genannte Führungseinsatz 15 ist über der Auffangwanne 21 angeordnet bzw. auf diese aufgesetzt.

Zwischen den beiden Reihen von Grillspiessen 3 ist eine vertikal ausgerichtete Wärmequelle in Form eines elektrischen Heizmittels 18 angeordnet welches Heizschlangen umfasst. Das Heizmittel 18 ist entsprechend seitlich von sowie zwischen den Grillspiessen 3 angeordnet und strahlt seine Wärme zu beiden Seiten an die beiden Reihen von Grillspiessen 3 ab.

Zum Betreiben des Grillspiesswenders 1 wird nun wenigstens ein mit Grillgut 20 bestückter Grillspiesse 3 von oben oder von schräg oben eingeführt. Bei diesem Vorgang wird der Grillspiess 3 im unteren Bereich mit seiner Spiessspitze 22 in das Durchgangsloch 16 am Führungseinsatz 16 eingeführt und oben mit seiner hutfömigen Auskragung 8 am Reibrad 7 eingehängt. Die Antriebswelle 2 kann sich dabei bereits drehen oder kann im Anschluss an das Einhängen in Drehung versetzt werden. Das sich mit der Antriebswelle 2 ebenfalls drehende Reibrad 7 rollt nun an der innenseitigen Fläche der hutförmigen Auskragung 8 ab und versetzt den Grillspiess 3 in Drehung.

Ein umlaufender Umfassungsrand 6 sorgt dafür, dass das Reibrad 7 nicht von der Eingriffseite 9 abrutschen kann, wie dies z. B. bei einem leichten seitlichen Schlag passieren könnte,

Zur Entnahme des Grillspiesses 3 aus der Vorrichtung wird dieser einfach nach oben oder schräg nach oben weggezogen, so dass dieser aus dem Eingriff mit dem Reibrad 7 gelöst und mit der Spiessspitze 22 aus dem Durchgangsloch 16 herausgeführt wird.

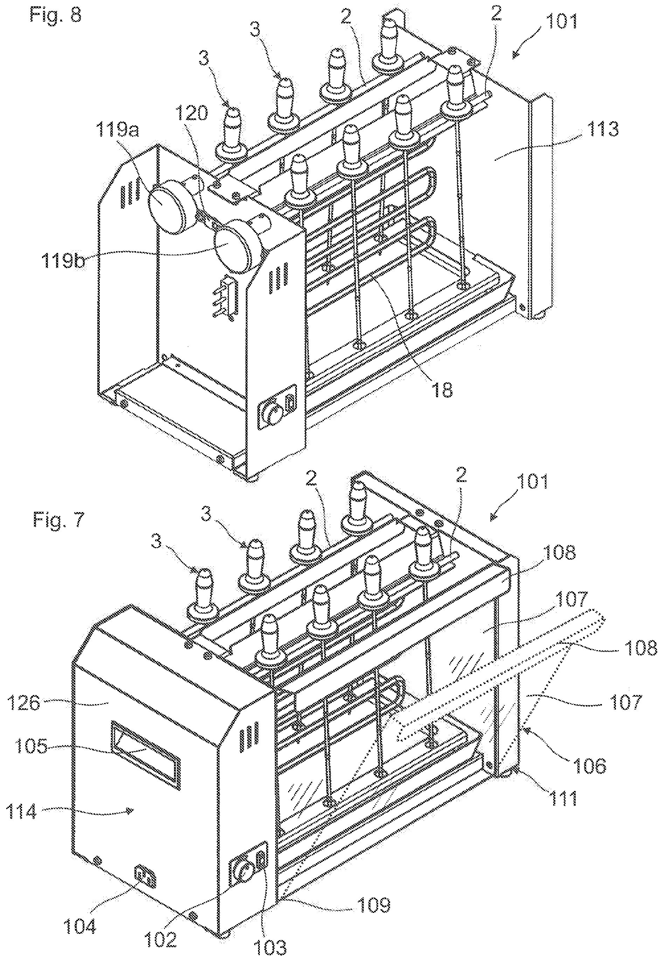

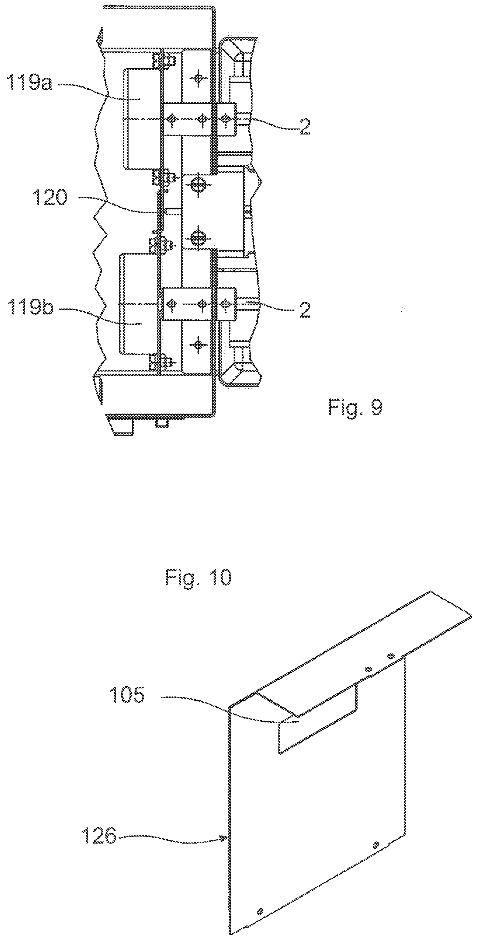

Der in den Figuren 7 bis 10 dargestellte Grillspiesswender 101 entspricht bezüglich seines Aufbaus und Funktion im Wesentlichen dem Grillspiesswender 1 gemäss den Figuren 1 bis 6. Daher wird an dieser Stelle auf eine Wiederholung der Beschreibung gleicher Merkmale und gleicher Funktionen verzichtet und vielmehr auf die Beschreibung zu den Figuren 1 bis 6 verwiesen. Nachfolgend werden lediglich jene Aspekte erörtert, in welchen sich der Grillspiesswender 101 gemäss den Figuren 7 bis 10 vom Grillspiesswender 1 gemäss den Figuren 1 bis 6 unterscheidet.

Die Antriebswellen 2 sind gemäss diesem Ausführungsvariante ebenfalls jeweils mit einem ersten Ende an einem Seitenschild 113 und mit einem zweiten Ende an einem seitlichen Teilgehäuse 114 bzw. an einer darin gehalterten Vorrichtung drehbar gelagert.

Im seitlichen Teilgehäuse 114 sind zwei elektrische Antriebsmotoren 119a, 119b vorgesehen (siehe Figur 8). Ein erster Antriebsmotor 119a ist koaxial mit einer ersten Antriebswelle 2 und ein zweiter Antriebsmotor 119b ist koaxial mit einer zweiten Antriebswelle 2 verbunden.

Die beiden Antriebsmotoren 119a, 119b sind überdies über eine Drehmomentstütze 120 miteinander verbunden. Die Drehmomentstütze 120 sichert die beiden Antriebsmotoren 119a, 119b gegenseitig gegen eine Verdrehung während des Betriebes.

Das seitliche Teilgehäuse 114 weist eine Verschalung 126 auf, mittels welcher der die Antriebsmotoren 119a, 119b aufnehmende Gehäuseraum abgedeckt werden kann. Die Verschalung wird zweckmässig mit dem Gehäuse 111 verschraubt.

In der Wand des seitlichen Teilgehäuses 114 ist ein Betätigungsschalter 103 zum Ein- und Ausschalten der Antriebe 119a, 119b angeordnet. Der Betätigungsschalter 103 kann auch zur Einstellung der Motorendrehzahl ausgelegt sein.

Ferner ist in der Wand des seitlichen Teilgehäuses 114 ein weiterer Betätigungsschalter 102 zum Ein- und Ausschalten einer Wärmequelle 18 sowie zum Einstellen der Wärmeleistung angeordnet. Im Weiteren ist in der Wand des seitlichen Teilgehäuses 114 auch ein Steckanschluss 104 zum Anschliessen eines Stromkabels vorgesehen.

Im Weiteren ist in der Verschalung 126 des seitlichen Teilgehäuses 114 eine Griffvertiefung 115 eingelassen, in welche mit der Hand zwecks Anheben und Tragen des Grillspiesswenders 101 oder zum Entfernen der Verschalung 126 eingegriffen werden kann.

Zwischen dem Teilgehäuses 114 und dem Seitenschild 113 ist beidseitig jeweils eine nach aussen, von der Wärmquelle 18 weg schwenkbare seitliche Abdeckung 106 angeordnet (in Figur 7 nur eine Abdeckung gezeigt). Die seitliche Abdeckung 106 dient als Spritzschutz sowie als Hitzeschutz gegen die von der Wärmequelle 18 abgestrahlte Wärme. Die seitliche Abdeckung 106 erfüllt zwei Funktionen. Zum einen schützt die Abdeckung 106 den Benutzer vor übermässiger Wärme. Zum anderen hält der Hitzeschutz die von der Wärmequelle 18 abgestrahlte Wärme im Gehäuse 111 zurück und fordert damit einerseits die gieichmässige Garung des Grillgutes und beschleunigt andererseits die Garung.

Die seitliche Abdeckung 106 gemäss vorliegendem Ausführungsbeispiel enthält eine transparente Abdeckwand 107, welche z. B. aus Glas sein kann. Dies ermöglicht dem Benutzer auch bei geschlossener Abdeckung die visuelle Überwachung des Garvorganges im Gehäuse 111. Die besagte Abdeckwand 107 braucht jedoch nicht zwingend transparent zu sein.

Im Weiteren enthält die seitliche Abdeckung 106 an ihrer oberen Endkante eine Griffleiste 108, über welche sich die Abdeckung 106 manuell öffnen und schliessen lässt. Die Abdeckung 106 ist an ihrer unteren Endkante über eine Schwenkachse 109 schwenkbar am Gehäuse 111 gelagert.

Die seitliche Abdeckung 106 lässt sich über die Schwenklagerung zwischen einer Schliess- und Offenstellung nach oben bzw. nach unten schwenken. Bevorzugt sind Mittel vorgesehen, welche erlauben, die Abdeckung in verschiedene Positionen, wie zum Beispiel in eine teilweise offene Position zu schwenken und in dieser Position fixieren.

Die oben beschriebene seitliche Abdeckung 106 und die Anordnung der Antriebsmotoren 119a, 119b haben keine direkte funktionelle Verbindung miteinander und sind daher als voneinander unabhängige Erfindungsaspekte zu betrachten.

## Patentansprüche

1. Grillspiesswender (1, 101) enthaltend:
- ein Gehäuse (11, 111);
- wenigstens eine horizontal oder im Wesentlichen horizontal am Gehäuse (11, 111) angeordnete Antriebswelle (2) zum Drehen wenigstens eines Grillspiesses (3);
- einen Antrieb (19; 19a, 19b) zum Antreiben der Antriebswelle (2); und
- eine Wärmequelle (18) zum Grillen eines am Grillspiesse (3) angebrachten Grillgutes (20),
wobei die Antriebswelle (2) wenigstens ein Drehmomentübertragungselement (7) zur Übertragung eines Drehmoments von der Antriebswelle (2) auf den Grillspiesse (3) enthält,
**dadurch gekennzeichnet, dass**
das Drehmomentübertragungselement (7) zur vertikalen oder im Wesentlichen vertikalen Halterung eines Grillspiesses (3) und zum Eingriff mit einem griffseitig am Grillspiess (3) angeordneten Drehmomentübertragungselement (8) ausgelegt ist, wobei die Antriebswelle (2) mehrere entlang ihrer Längserstreckung voneinander beabstandet angeordnete Drehmomentübertragungselemente (7) für jeweils einen Eingriff mit einem Grillspiess (3) enthält.

2. Grillspiesswender gemäss Anspruch 1, **dadurch gekennzeichnet, dass** das Drehmomentübertragungselement (7) der Antriebswelle (2) ein Antriebsrad, insbesondere ein Reibrad oder Zahnrad ist.

3. Grillspiesswender gemäss Anspruch 1 oder 2, **dadurch gekennzeichnet, dass** der Grillspiesswender (1) wenigstens einen Grillspiesse (3) mit einem Griffkörper (4) und einem Spiesskörper (5) umfasst, wobei der Grillspiesse (3) ein griffseitig angeordnetes Drehmomentübertragungselement (8) mit einer zum Spiesskörper (5) weisenden Eingriffseite (9) enthält, welche mit dem Drehmomentübertragungselement (7) der Antriebswelle (2) in Eingriff bringbar ist.

4. Grillspiesswender gemäss den Ansprüchen 2 und 3, **dadurch gekennzeichnet, dass** die Eingriffseite (9) des Grillspiesses (3) für einen reibschlüssigen Eingriff eines Reibrades (7) ausgelegt ist.

5. Grillspiesswender gemäss den Ansprüchen 2 und 3, **dadurch gekennzeichnet, dass** die Eingriffseite des Grillspiesses Erhebungen und Vertiefungen für den Eingriff eines Zahnrades aufweist.

6. Grillspiesswender gemäss einem der Ansprüche 3 bis 5, **dadurch gekennzeichnet, dass** das griffseitig angeordnete Drehmomentübertragungselement (8) am Grillspiess (3) eine zwischen dem Griffkörper (4) und dem Spiesskörper (5) angeordnete kragenartige Anformung ist, welche eine dem Spiesskörper (5) zugewandte Eingriffseite (9) für das Drehmomentübertragungselement (7) an der Antriebswelle (2) ausbildet.

7. Grillspiesswender gemäss Anspruch 6, **dadurch gekennzeichnet, dass** die kragenartige Anformung (8) tellerförmig oder pilz- bzw. hutförmig ist.

8. Grillspiesswender gemäss Anspruch 6 oder 7, **dadurch gekennzeichnet, dass** die Eingriffseite (9) des Drehmomentübertragungselement (8) eine dem Spiesskörper (5) zugewandte konkave Öffnung bzw. Vertiefung ist.

9. Grillspiesswender gemäss einem der Ansprüche 1 bis 8, **dadurch gekennzeichnet, dass** der Grillspiesswender (1) zwei parallel oder im Wesentlichen parallel nebeneinander und von einander beabstandet geführte Antriebswellen (2) enthält, wobei jede der Antriebswellen (2) wenigstens ein und vorzugsweise mehrere entlang ihrer Längserstreckung voneinander beabstandet angeordnete Drehmomentübertragungselemente (7) für jeweils einen Eingriff mit einem Grillspiess (3) enthält.

10. Grillspiesswender gemäss einem der Ansprüche 1 bis 9, **dadurch gekennzeichnet, dass** die Wärmequelle (18) derart im Grillspiesswender (1) angeordnet ist, dass die Wärme in Schwerkraftrichtung (G) betrachtet seitlich an das Grillgut (20) abgegeben wird.

11. Grillspiesswender gemäss einem der Ansprüche 3 bis 10, **dadurch gekennzeichnet, dass** die Wärmequelle (18) in Schwerkraftrichtung (G) betrachtet seitlich von dem oder den Grillspiess(en) (3) angeordnet ist.

12. Grillspiesswender gemäss einem der Ansprüche 9 bis 11, **dadurch gekennzeichnet, dass** der Grillspiesswender (1) zwei parallel oder im Wesentlichen parallel nebeneinander und von einander beabstandet geführte Antriebswellen (2) enthält, wobei jeder Antriebswelle (2) mehrere entlang ihrer Längserstreckung in Reihe angeordnete Grillspiesse (3) zugeordnet sind, wobei die Wärmequelle (18) vorzugsweise zwischen den beiden Reihen von Grillspiessen (3) angeordnet ist.

13. Grillspiesswender gemäss einem der Ansprüche 1 bis 12, **dadurch gekennzeichnet, dass** der Grillspiesswender (101) wenigstens zwei Antriebsmotoren (119a, 119b) enthält, welche jeweils eine Antriebswelle (2) antreiben und die wenigstens zwei Antriebsmotoren (119a, 119b) vorzugsweise über eine Drehmomentstütze (120) miteinander verbunden sind.

## Claims

1. A grill spit turner (1, 101) comprising:
- a housing (11, 111);
- at least one drive shaft (2) which is arranged horizontally or essentially horizontally on the housing (11,111) and which is for rotating at least one grill spit (3);
- a drive (19; 19a, 19b) for driving the drive shaft (2); and
- a heat source (18) for grilling a product (20) to be grilled, said product being attached on the grill spit (3),
wherein the drive shaft (2) comprises at least one torque transmission element (7) for transmitting a torque from the drive shaft (2) onto the grill spit (3).
**characterised in that**
the torque transmission element (7) is designed for the vertical or essentially vertical mounting of a grill spit (3) and for the engagement with a torque transmission element (8) which is arranged on the grill spit (3) at the grip side, wherein the drive shaft (2) comprises several torque transmission elements (7) which are arranged distanced to one another along the longitudinal extension of the drive shaft, for engaging with a grill spit (3) in each case.

2. A grill spit turner according to claim 1, **characterised in that** the torque transmission element (7) of the drive shaft (2) is a drive wheel, in particular a friction wheel or toothed wheel.

3. A grill spit turner according to claim 1 or 2, **characterised in that** the grill spit turner (1) comprises at least one grill spit (3) with a grip body (4) and with a spit body (5), wherein the grill spit (3) comprises a torque transmission element (8) which is arranged on the grip side and which is with an engagement side (9), said engagement side facing the spit body (5) and being able to be brought into engagement with the torque transmission element (7) of the drive shaft (2).

4. A grill spit turner according to claims 2 and 3, **characterised in that** the engagement side (9) of the grill spit (3) is designed for a frictional engagement of a friction wheel (7).

5. A grill spit turner according to the claims 2 and 3, **characterised in that** the engagement side of the grill spit comprises prominences and recesses for the engagement of a toothed wheel.

6. A grill spit turner according to one of the claims 3 to 5, **characterised in that** the torque transmission element (8) which is arranged on the grip side, on the grill spit (23) is a collar-like integral formation which is arranged between the grip body (4) and the spit body (5) and which forms an engagement side for the torque transmission element (7) on the drive shaft (2), said engagement side facing the spit body (5).

7. A grill spit turner according to claim 6, **characterised in that** the collar-like integral formation (8) is plate-shaped or mushroom-shaped which is to say hat-shaped.

8. A grill spit turner according to claim 6 or 7, **characterised in that** the engagement side (9) of the torque transmission element (8) is a concave opening or recess, which faces the spit body (5).

9. A grill spit turner according to one of the claims 1 to 8, **characterised in that** the grill spit turner (1) comprises two drive shafts (2) which are led parallel or essentially parallel next to one another and in a manner distanced to one another, wherein each of the drive shafts (2) comprises at least one and preferably several torque transmission elements (7) which are arranged distanced to one another along the longitudinal extension of the drive shaft, in each case for engaging with a grill spit (3).

10. A grill spit turner according to one of the claims 1 to 9, **characterised in that** the heat source (18) is arranged in the grill spit turner (1) in a manner such that the heat, considered in the direction of gravity (G), is released laterally onto the objects (20) to be grilled.

11. A grill spit turner according to one of the claims 3 to 10, **characterised in that** the heat source (18), considered in the direction of gravity (G), is arranged laterally of the grill spit or spits (3).

12. A grills spit turner according to one of the claims 9 to 11, **characterised in that** the grill spit turner (1) comprises two drive shafts which are led parallel or essentially parallel next to one another and in a manner distanced to one another, wherein several grill spits (3) arranged in series along the longitudinal extension of the drive shaft are assigned to each drive shaft (2), wherein the heat source (19) is preferably arranged between the two rows of grill spits (3).

13. A grill spit turner according to one of the claims 1 to 12, **characterised in that** the grill spit turner (101) comprises at least two drive motors (119a, 119b), which in each case drive a drive shaft (2), and the at least two drive motors (119a, 119b) are connected to one another preferably via a torque support (120).

## Revendications

1. Rôtissoire (1, 101) contenant :
un boîtier (11, 111),
au moins un arbre d'entraînement (2) disposé à l'horizontale ou essentiellement à l'horizontale dans le boîtier (11, 111) et servant à entraîner en rotation au moins une broche (3) à rôtir,
un entraînement (19; 19a, 19b) qui entraîne l'arbre d'entraînement (2) et
une source (18) de chaleur servant à rôtir un produit à rôtir (20) placé sur la broche à rôtir (3),
l'arbre d'entraînement (2) contenant au moins un élément (7) de transfert de couple de rotation qui transfère un couple de rotation de l'arbre d'entraînement (2) à la broche à rôtir (3),
**caractérisée en ce que**
l'élément (7) de transfert de couple de rotation est conçu pour maintenir une broche à rôtir (3) verticalement ou essentiellement à la verticale et pour engager un élément (8) de transfert de couple de rotation disposé sur la broche à rôtir (3) du côté de manche et
**en ce que** l'arbre d'entraînement (2) contient plusieurs éléments (7) de transfert de couple de rotation disposés à distance les uns des autres le long de son extension en longueur et engageant chacun une broche à rôtir (3).

2. Rôtissoire selon la revendication 1, **caractérisée en ce que** l'élément (7) de transfert de couple de rotation de l'arbre d'entraînement (2) est une roue d'entraînement, en particulier une roue de frottement ou une roue dentée.

3. Rôtissoire selon les revendications 1 ou 2, **caractérisée en ce que** la rôtissoire (1) comporte au moins une broche à rôtir (3) dotée d'un corps de manche (4) et d'un corps de broche (5), la broche à rôtir (3) contenant un élément (8) de transfert de couple de rotation disposé du côté de manche et doté d'un côté d'engagement (9) tourné vers le corps de broche (5) et apte à être engagé sur l'élément (7) de transfert de couple de rotation de l'arbre d'entraînement (2).

4. Rôtissoire selon les revendications 2 et 3, **caractérisée en ce que** le côté d'engagement (9) de la broche à rôtir (3) est conçu pour engager à frottement une roue de frottement (7).

5. Rôtissoire selon les revendications 2 et 3, **caractérisée en ce que** le côté d'engagement de la broche à rôtir présente des saillies et des creux permettant d'engager une roue dentée.

6. Rôtissoire selon l'une des revendications 3 à 5, **caractérisée en ce que** l'élément (8) de transfert de couple de rotation disposé du côté de mange de la broche à rôtir (3) est une saillie en forme de collet disposé entre le corps de mange (4) et le corps de broche (5), qui forme sur l'arbre d'entraînement (2) un côté d'engagement (9), tourné vers le corps de broche (5), pour l'élément (7) de transfert de couple de rotation.

7. Rôtissoire selon la revendication 6, **caractérisée en ce que** la saillie (8) en forme de collet a la forme d'un plateau, d'un champignon ou d'un chapeau.

8. Rôtissoire selon les revendications 6 ou 7, **caractérisée en ce que** le côté d'engagement (9) de l'élément (8) de transfert de couple de rotation est une ouverture ou un creux concave tourné vers le corps de broche (5).

9. Rôtissoire selon l'une des revendications 1 à 8, **caractérisée en ce que** la rôtissoire (1) contient deux arbres d'entraînement (2) disposés parallèlement l'un à l'autre ou essentiellement en parallèle l'un à l'autre et maintenus à distance l'un de l'autre, chacun des arbres d'entraînement (2) contenant au moins un et de préférence plusieurs éléments (7) de transfert de couple de rotation engageant chacun une broche à rôtir (3) et disposés à distance les uns des autres le long de son extension en longueur.

10. Rôtissoire selon l'une des revendications 1 à 9, **caractérisée en ce que** la source de chaleur (18) est disposée dans la rôtissoire (1) de telle sorte que la chaleur soit délivrée sur le produit à rôtir (20) latéralement par rapport à la direction de la gravité (G).

11. Rôtissoire selon l'une des revendications 3 à 10, **caractérisée en ce que** la source de chaleur (18) est disposée par rapport à la broche ou aux broches à rôtir (3) latéralement par rapport à la direction de la gravité (G).

12. Rôtissoire selon l'une des revendications 9 à 11, **caractérisée en ce que** la rôtissoire (1) contient deux arbres d'entraînement (2) disposés parallèlement l'un à l'autre ou essentiellement en parallèle l'un à l'autre et maintenus à distance l'un de l'autre, plusieurs broches à rôtir (3) disposées en série dans le sens de son extension en longueur étant associées à chaque arbre d'entraînement (2), la source de chaleur (18) étant disposée de préférence entre les deux rangées de broches à rôtir (3).

13. Rôtissoire selon l'une des revendications 1 à 12, **caractérisée en ce que** la rôtissoire (101) contient au moins deux moteurs d'entraînement (119a, 119b) qui entraînent chacun un arbre d'entraînement (2), les deux ou plusieurs moteurs d'entraînement (119a, 119b) étant reliés l'un à l'autre de préférence par l'intermédiaire d'un soutien (120) au couple de rotation.
